# EUROPEAN PATENT APPLICATION

(11) **EP 1 239 356 A1**
(43) Date of publication of application: **11.09.2002**
(21) Application number: 02002055.8
(22) Date of filing: 08.02.2002
(51) Int. Cl.: G05D 3/00, F16K 31/06, F15B 13/043, F16K 31/40

(54) **Solenoid operated valve with hydraulic dampening**

(30) Priority: 28.02.2001 US 795570
(71) Applicant: EATON CORPORATION, Cleveland, Ohio 44114 (US)
(72) Inventor: Ambrose, Steven L., Farmington, MI 48335 (US); Ness, John A., Birmingham, MI 48009-3844 (US); Gluf, Carl G., Jr., Rochester Hills, MI 48307 (US); Smith, Danny M., Algonac, MI 48001 (US)
(74) Representative: Patentanwälte Rüger, Barthelt & Abel

(57) **Abstract**

A solenoid operated pressure balanced spool type pressure control valve for controlling flow between a pressure source inlet and a signal pressure outlet and between the signal pressure outlet and an exhaust or sump return port. the spool has metering orifices formed in pressure equalization flow passages through the spool. The metering orifices preferably comprise three orifices having a diameter in the range of about 0.50 - 0.76 mm for providing viscous dampening of the flow through the spool and dampers oscillations of the spool and armature due to hydraulic and/or electrical transients.

## Description

### CROSS-REFERENCE TO RELATED APPLICATIONS

Not Applicable

### STATEMENT REGARDING FEDERALLY SPONSORED RESEARCH OR DEVELOPMENT

Not Applicable

### MICROFICHE APPENDIX

Not Applicable

### BACKGROUND OF THE INVENTION

The present invention relates to solenoid operated valves of the type employed for providing a controlled pressure signal to an outlet port by controlling bleed flow to an exhaust port or return to sump port. Valves of this type are employed in numerous control applications and particularly for control of the pressure to shifting actuators in an automatically shifted power transmission for motor vehicle usage.

In automatic transmissions for motor vehicles where the shifting is controlled by an electrical signal from an on-board electronic controller, problems have been encountered in utilizing solenoid operating valves for controlling the pressure in the hydraulic circuits for the shifting actuators. Where a pressure balanced spool-type valve arrangement is employed, relatively low power solenoids are employed, such as solenoid utilizing a current of less than ten amperes at 12 to 24 Volts D.C.; and, in such valve arrangements mechanical instability in the form of oscillation of the spool and armature has been encountered. Such instability has been attributed to the combination of fluctuations in the current flow to the solenoid coil, resulting in variations in the electromagnetic force on the armature which controls movement of the spool and armature, and the occurrence of hydraulic transients in the hydraulic circuit to be controlled by the valve acting upon the spool through the signal pressure control port of the valve. The occurrence of this phenomena is particularly troublesome in transmission shift control circuits where the spring forces on the transmission shift actuators are relatively high and provide a "stiff' or non-resilient system which does not readily absorb transients or shocks but transmits them to the valve. Such a condition can readily result in oscillation of the valving spool and armature, particularly where transients occur in the electrical control signal to the solenoid coil in addition to hydraulic transients and this oscillation can result in erratic shifting of the transmission.

Thus, it has long been desired to provide a way or means of dampening oscillations in a solenoid operated hydraulic pressure control valve of the type controlling flow to a signal pressure outlet port by bleeding flow to an exhaust or sump port and particularly such a valve of the spool type employing a pressure balanced spool operated by a relatively low power solenoid.

### BRIEF SUMMARY OF THE INVENTION

It is an object of the present invention to provide dampening of movement of a pressure balanced spool and armature in a relatively low power solenoid operated pressure balanced spool control valve of the type controlling pressure to a signal port by bleeding fluid to an exhaust or return to sump port.

The present invention relates to solenoid operated hydraulic pressure control valves of the pressure balanced spool-type which control flow from a high pressure inlet to a control signal outlet port by bleeding pressurized fluid to an exhaust or sump return port. The valve of the present invention utilizes a pressure balanced spool having a passage axially through the spool such that pressure equalization occurs on opposite ends of the spool. The pressure equalizing flow passage through the spool has a metering orifice therein which limits the rate of flow therethrough and thus provides for flow restriction and dampening of the motion or oscillation of the spool and armature which may be caused by electrical and/or hydraulic transients.

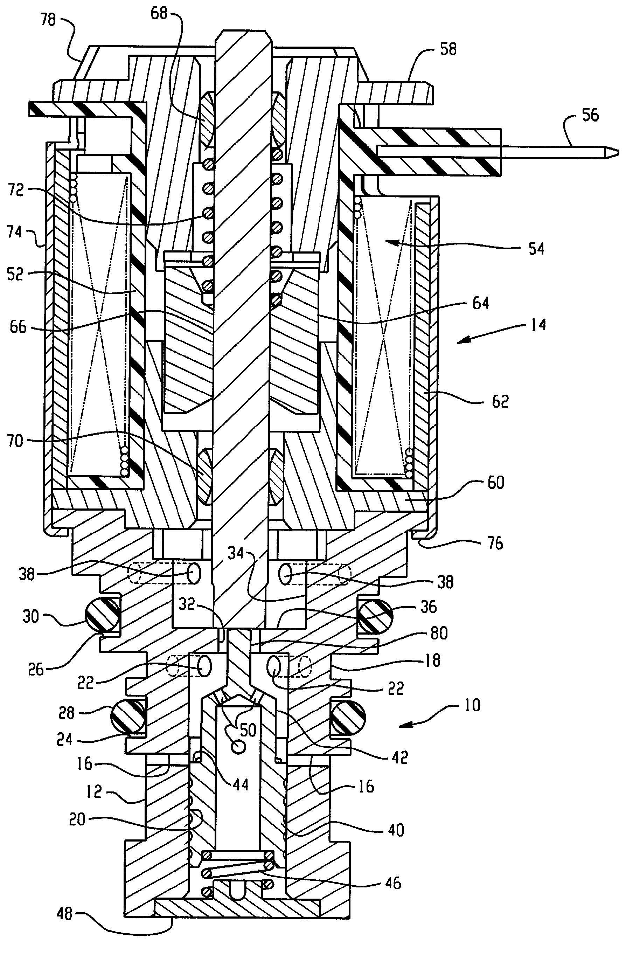

### BRIEF DESCRIPTION OF THE DRAWING

The sole drawing is a cross-section of the valve assembly of the present invention taken through the axis of the valving spool.

### DETAILED DESCRIPTION OF THE INVENTION

Referring to the drawing, the valve assembly is indicated generally at 10 and includes a valve body 12 having attached thereto a solenoid operator indicated generally at 14; and, the body 12 has an inlet port and preferably a plurality of inlet ports 16 formed therein in an annular collector groove 18 formed about the outer periphery of the body with the ports communicating with a valving bore 20 formed in the body.

A pressure signal or control outlet port and preferably a plurality of such ports are formed in the body 12 and communicate with valving bore 20 at a station axially spaced along the bore from inlet port 16 as denoted by reference numeral 22.

A pair of circumferential grooves 24, 26 respectively are formed on the outer periphery of the body 12 and disposed axially with respect to bore 20 on opposite sides of the control signal outlet ports 22. The grooves 24, 26 each have a seal ring 28, 30 respectively disposed therein for isolating the signal outlet ports 22 from any other ports upon insertion of the body into the cavity of a connecting structure (not shown) for connection to the hydraulic circuit to be controlled.

The body 12 has a bore 32 formed therethrough and communicating with the valving bore 20; and, a counter-bore 34 is formed in the upper end of the body and forms a generally flat annular valve seating surface 36 about the upper end of bore 32.

An exhaust or return to sump outlet port 38, and preferably a plurality of such ports is formed in the body to communicate with the counter bore 34.
The outlet ports 38 are axially spaced with respect to the seal rings 30 on the side opposite the seal ring 30 from the control signal outlet port 22.

A spool 40 is slidably disposed in precision closely fitting arrangement in bore 20 and has a reduced diameter portion 42 formed on the upper end thereof which forms a shoulder or land 44 with the outer periphery thereof, with the land 44 located axially along the spool at a station or position so as to be effective for opening and closing the inlet ports 16 within the range of movement of the spool in bore 20.

The lower end of spool 40 is hollow and has one end of a spring 46 registered against the undersurface thereof with the opposite or lower end of spring 46 registered against a plug 48 which closes the lower end of bore 20 in the body.

Spool 40 has a passage at least one and preferably plurality of passages or orifices disposed in circumferential arrangement as denoted by reference numeral 50 formed therethrough to provide for pressure equalization on the opposite ends of the spool 40.

The passages or metering orifices 50 provided in the spool for pressure equalization are sized so as to provide a reduced or limited flow of fluid between opposite ends of the spool 40; and, this restriction of the flow of the metering orifices 50 provides for viscous damping of the movement of the spool and armature thus preventing oscillation. In the present practice of the invention, the metering orifices are preferably formed with a diameter in the range of about 0.50-0.76 mm and three orifices are employed for dampening of hydraulic fluid of the type employed in automatic transmissions used in motor vehicles. It will be understood however, that for different hydraulic fluids, other ranges of orifice sizing may be required depending upon the viscosity of the fluid.

Solenoid 14 includes a bobbin 52 having a coil 54 wound thereon and having one end connected to an electrical connector terminal 56 secured to the bobbin and extending outward therefrom. The bobbin is mounted on spaced annular pole piece and flux collectors 58, 60 respectively which are magnetically interconnected by cylindrical spacer 62 to complete a flux loop about the coil. A moveable armature 64 is moveably received interiorly of the bobbin and has an actuating rod 66 secured thereto and extending therethrough with the upper end of the rod journalled in a bearing 68 disposed in the pole piece 58. The lower end of the rod 66 is journalled in a bearing 70 disposed in the lower flux collector 60. The armature and rod 66 are biased downwardly by a spring 72 having one end registered against upper bearing 68 and the lower end registered against the upper surface of armature 64. The solenoid assembly 14 is retained on the body 12 by an outer canister or casing 74 having the lower end thereof captured over a flange on the body as denoted by reference numeral 76. The upper end of the casing is formed or crimped over the pole piece 58 as denoted by reference numeral 78.

The lower end of the rod 66 is formed in a generally flat configuration to seat or close on the valve seating surface 36 in the body 12 under the urging of spring 72 when the coil is de-energized.

The upper end of spool 40 has a pin or projection 80 which extends upwardly from the reduced diameter portion 42 of spool 40 and extends upwardly through the valve seat passage 32 and contacts the lower end of rod 66.

In operation, with coil 54 de-energized spring 72 is operative to seat the lower end of rod 66 against valve seat 36 and hold the spool in a position so as to open inlet port 16. As the coil is increasingly energized, the armature lifts rod 66 and allows spring 46 to push the spool upwardly to progressively close inlet port 16 and reduce the pressure to the signal outlet port 22 and open valve seating surface 36 allowing flow through bore 32 to exhaust ports 38.

The springs 46, 72 are chosen to have a spring rate and installed preload on the spool to provide a desired pressure calibration of the closing of the inlet port 16 and opening of exhaust port 38 in a manner well known in the art.

The present invention thus provides a balanced spool-type solenoid operated pressure control valve with pressure equalization passages through the spool which restrict flow therethrough and provide viscous damping to movement of the spool and thereby prevent undesired oscillations of the spool and armature.

Although the invention has hereinabove been described with respect to the illustrated embodiments, it will be understood that the invention is capable of modification and variation and is limited only by the following claims.

## Claims

1. A method of dampening a solenoid operated valve comprising:
(a) forming a valving bore in a valve body and porting the bore therealong for a pressure supply inlet, a control signal outlet and an exhaust outlet;
(b) disposing a spool in the bore and forming a flow passage axially through the spool, and effecting pressurization equalization on the opposite ends of the spool and disposing a metering orifice in the flow passage;
(c) disposing a solenoid with a moveable armature on said body and energizing the solenoid and moving the spool by contact with the armature and controlling flow from the inlet to signal outlet to the exhaust outlet; and,
(d) limiting flow of fluid through said flow passage with said orifice and damping the movement of the spool and armature.

2. The method defined in claim 1, wherein the step of disposing a metering orifice includes forming a plurality of circumferentially spaced orifices having a diameter in the range of about 0.50 - 0.76 mm.

3. The method defined in claim 1, wherein the step of moving the spool includes moving the spool against a spring bias.

4. The method defined in claim 1, wherein the step of controlling the flow includes valving flow between the signal outlet and the exhaust outlet.

5. The method defined in claim 5, wherein the step of valving flow between the signal outlet and the exhaust outlet includes forming a valve seat and moving a member attached to the armature with respect to the valve seat.

6. The method defined in claim 1, wherein the step of controlling the flow between the signal outlet and the exhaust outlet includes providing a valve seat between the signal outlet and the exhaust outlet and moving the armature with respect to the valve seat.

7. The method defined in claim 6, wherein the step of moving the spool includes extending an end portion of the spool through the valve seat and contacting the end portion with the armature.

8. A solenoid operated valve assembly comprising:
(a) a valve body having a valving bore ported therealong in axially spaced arrangement to an inlet port, a signal outlet port and an exhaust port;
(b) a spool disposed in said bore and slidably moveable therein;
(c) a valve seat disposed between said signal outlet port and said exhaust port and operative for exclusively communicating therethrough flow to the exhaust port;
(d) a solenoid attached to the body and having therein an armature moveable in response to electrical energization thereof and including a member moveable with respect to the valve seat for controlling flow therethrough;
(e) a portion of said spool contacted by said member for movement thereby and operative for controlling flow from the inlet port to the valving bore; and,
(f) a pressure equalization passage formed axially through said spool and including a metering orifice therein operable for limiting flow therethrough and dampening movement of the spool.

9. The valve assembly defined in claim 8, further comprising a plurality of metering orifices having a diameter in the range of about 0.50 - 0.76 mm.

10. The valve assembly defined in claim 8, wherein the member moveable with respect to the valve seat comprises a rod attached to the armature.

11. The valve assembly defined in claim 8, wherein the spool includes a portion extending through the valve seat for contact with said member.
